# EUROPEAN PATENT SPECIFICATION

(11) **EP 2 093 972 B1**
(45) Date of publication and mention of the grant of the patent: **17.07.2013**
(21) Application number: 09397504.3
(22) Date of filing: 19.02.2009
(51) Int. Cl.: H04L 29/06

(54) **Network-initiated PDP context activation**
Netzwerkinitiierte PDP-Kontextaktivierung
Activation de contexte de PDP initié par réseau

(30) Priority: 21.02.2008 FI 20085159
(43) Date of publication of application: 26.08.2009
(73) Proprietor: TeliaSonera AB, S-106 63 Stockholm (SE)
(72) Inventor: Tervo, Mika, FI-33820, Tampere (FI)
(74) Representative: Pursiainen, Timo Pekka

(56) References cited:
- WO-A-02/41592
- WO-A-2004/010649
- US-B1- 7 289 462
- SHNEYDERMAN ET AL.: 'Mobile VPNs for Next Generation GPRS and UMTS Networks', [Online] 31 December 2001, Lucent Technologies

## Description

### Field of the invention

The present invention relates to packet data protocol (PDP) context activation, and more particularly to network-initiated PDP context activation.

### Background of the invention

The General Packet Radio System (GPRS), implemented both in the 2^{nd} and 3^{rd} generation (2G/3G) mobile networks, provides the 2G and 3G mobile stations with a packet-switched data transmission service. The GPRS connection enables the users of the mobile stations to access any public Internet service, for example.

Naturally the GPRS service provides the users of the mobile stations also a possibility to access private networks, like a company's LAN, through a VPN connection. However, arranging an extensive access to all necessary data services in the company's LAN, such as e-mail, calendar, intranet services and different database applications, may be a difficult and expensive investment for a small company, a small branch office or a private entrepreneur; it typically requires investments in various equipment and software, which must further be installed, maintained and updated continuously.

Therefore mobile network operators (MNOs) offer solutions, wherein a gateway server is provided in the operator's network to carry out all operations that are required for remote working and wireless connections between different devices and operation of systems in closed VPNs. The gateway server operates as a gateway between the mobile network (e.g. the GPRS network) and the company's LAN. The gateway server may be provided with a company-specific or customer-specific Access Point Name (APN), and it may carry out all necessary operations relating to, for example, user authentication, user ID management and maintenance, connection capacity management, and maintenance and level of service. Such service offered by an MNO allows individual remote workstations and, for example, branch office networks to establish remote connections to the company's LAN. The implementation in MNO's own network provides the possibility to use static IP addresses for the terminals, whereby no dynamic IP or mobile IP address allocation is required. Furthermore, no separate software is required to be installed in the terminal devices.

The above-described service preferably enables two-way IP traffic; i.e. also from the company's LAN to a remote terminal. With the popularity of services like push mail and RSS feeds, there is a need for network-originated data transfer. For example, in push e-mail service new e-mail is instantly and actively transferred ("pushed") to the e-mail client (i.e. remote terminal), when the e-mail arrives at the mail server. There may also be company-specific telemetric services, e.g. monitoring manufacturing process or other remote diagnostics, wherein the company's network typically transmits data to a remote terminal at long intervals.

In order to transmit or receive GPRS data, the terminal must first register for (attach to) the GPRS network, and then activate a packet data address it wishes to use by requesting the network to activate a GPRS packet data protocol (PDP) context. Regarding the above-described network-originated data transfer, if the terminal has its PDP context activated, the IP-based data can be routed from the private network to the terminal via the gateway server.

However, if the terminal has no PDP context activated, the network-originated data transfer cannot be started before the PDP context is activated. The problem involved therein is that the current implementations of 2G and 3G networks do not support network-initiated PDP context activation; there are plans to implement the feature in future standard releases, and for example WO01/89252, EP1540490 and WO03/79636 disclose various methods for implementing and utilising the process of network-initiated PDP context activation. Nevertheless, in advent of the actual implementation an alternative solution needs to be found for enabling network-initiated PDP context activation.

WO02/41592 discloses a packet switched core network, which is adapted for carrying out a PDP context activation in which a PDP address is assigned to a mobile station and in which a given quality of service is assigned through the network in a communication session between the mobile station and an application processor in question, whereby an application server initiates a context activation in which the QoS is seeked altered for the mobile station.

"Mobile VPNs for Next Generation GPRS and UMTS Networks", Alex Shneyderman, Abbas Bagasrawala, Alessio Casati, 2000, discloses various alternative technologies to implement a mobile VPN in connection with 2G/3G mobile networks.

### Summary of the invention

Now there has been invented an improved method and related apparatuses, by which the network-initiated PDP context activation is enabled. The various aspects of invention include a method, a telecommunication system, a gateway server, which are characterized by what is stated in the independent claim. Various embodiments of the invention are disclosed in the dependent claims.

According to the first aspect, there is provided a method for network-initiated packet data protocol (PDP) context activation in a system comprising: a mobile communication network including a packet data network part and another network part, which may be e.g. a circuit-switched network part or another packet data network; a fixed network comprising a gateway server arranged to provide virtual private network (VPN) connections between a mobile terminal connected to the mobile communication network and a private network, the method comprising: receiving, in the gateway server, Internet Protocol (IP)-based data, targeted to the mobile terminal, from the private network; the gateway server checking, from a routing table, whether said mobile terminal has an activated PDP context with its corresponding gateway node; in response to said mobile terminal having no activated PDP context, examining a destination address of the IP-based data to solve at least one identifier of the mobile terminal used in the mobile communication network; signalling said mobile terminal, based on said at least one identifier, at least partly via said another network part with a request to activate a PDP context; and starting a PDP context activation procedure between said mobile terminal and its corresponding gateway node (GGSN) in the packet data network part.

According to an embodiment, in response to said mobile terminal having no activated PDP context, the IP-based data is routed to a data examining function having a lower priority route to carry out said examining.

According to an embodiment, said data examining function is implemented within the gateway server or in a secondary server.

According to an embodiment, the packet header data is resolved from a terminated VPN connection between the private network and the gateway server, whereby said data examining function searches for predefined data items, such as said destination address of the IP-based data, in the packet header data; and searches for said at least one identifier of the mobile terminal used in the mobile communication network, based on at least one predefined data item of the packet header data, e.g. from a look-up table.

According to an embodiment, said identifier of the mobile terminal used in the mobile communication network is an MSISDN number of the terminal, the method further comprising: sending a signalling message, e.g. a short message with a predefined format representing a PDP context activation request to the MSISDN number of the terminal.

According to an embodiment, the gateway server receives a retransmission of the IP-based data, targeted to the mobile terminal, from the private network after a delay required for establishing an activated PDP context; and the IP-based data is routed to the mobile terminal via its corresponding gateway node (GGSN) in the packet data network part.

The arrangement according to the invention provides significant advantages. The invention circumvents the problem of the network-initiated PDP context activation not being possible by utilising the available terminal-initiated PDP context activation through a very simple signalling procedure. The invention does not require any user intervention from the terminal side or any changes in the radio network implementation; it is only required that the mobile station includes the logic for detecting the PDP context activation request sent by the network, more particularly by the data examining functionality. The arrangement is also safe from the perspective of the mobile network operator (MNO) offering the gateway service, since the PDP context activation is carried out in an established manner, whereby no changes of security aspects (e.g. authorisation/authentication) of the service are required.

The other aspects of the invention include a telecommunication system, a gateway server and a mobile terminal arranged to operate in accordance with said method.

### List of drawings

In the following, various embodiments of the invention will be described in more detail with reference to the appended drawings, in which
- Fig. 1: shows a simplified network structure of an MNO service comprising a gateway server operating as a secure gateway between a plurality of mobile stations and a private network;
- Fig. 2: shows a signalling chart of a network-initiated PDP context activation according to an embodiment of the invention; and
- Fig. 3: shows a simplified structure of a data communication device.

### Description of embodiments

In the following, the various aspects of the invention will be described as implemented in a GSM/GPRS network. A skilled man nevertheless appreciates that the same network elements required to apply the invention are equally present in a 3GPP (UMTS) network. Moreover, even though the invention is illustrated in connection with the GPRS network structure, it is notified that the invention is equally applicable in any mobile packet data network comprising the necessary network elements. Accordingly, the invention can be applied in operator networks according to e.g. 3GGP2 definitions (i.e. CDMA2000) or TiSPAN (Telecoms & Internet converged Services & Protocols for Advanced Networks) definitions.

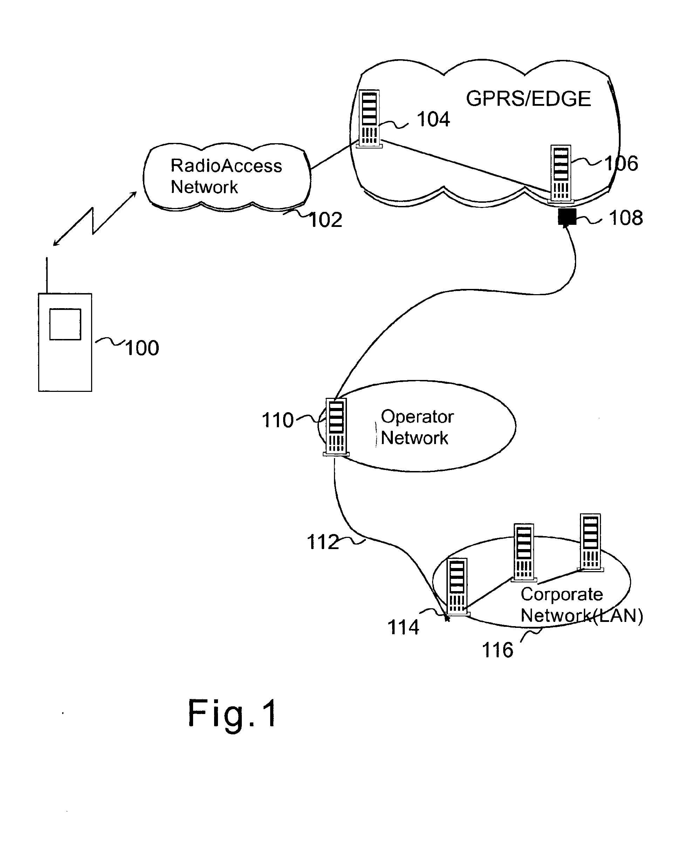

Fig. 1 shows a block diagram depicting the network interconnections for supporting an MNO service, known as such, wherein a gateway server is provided in the operator's network to operate as a secure gateway between a plurality of mobile stations and a private network, such as a company's LAN.

A mobile station is herein referred to as any communication device capable of establishing a PDP context with the network elements of a mobile network. Thus, a mobile station may include a single integrated device, such as a mobile phone or a PDA device, or attached devices, such as a laptop or a palmtop computer using a mobile phone or modem to communicate via the mobile network. In Fig. 1, a mobile station 100 is connected to the mobile network via the radio access network GERAN 102 (or possibly UTRAN in case of 3G network). The radio access network comprises the necessary network elements, such as base stations and base station controllers (not shown), via which the packet data connection may be established to the actual packet data network elements, particularly to the serving node SGSN 104.

The main network elements of the GPRS and the 3G network are the gateway nodes GGSN 106 (Gateway GPRS Support Node) and the serving nodes SGSN 104 (Serving GPRS Support Node). Typically several serving nodes SGSN are connected to one gateway node GGSN. Both nodes SGSN and GGSN function as routers supporting the mobility of a mobile station, which routers control the mobile system and route data packets to mobile stations regardless of their location and the used protocol. A task of the serving node SGSN is to detect mobile stations capable of packet radio connections in its service area, to transmit and receive data packets from said mobile stations and to track the location of the mobile stations in its service area. Records related to packet radio services including subscriber-specific packet data protocol contents are also stored in the home subscriber server HSS (not shown).

The gateway node GGSN acts as a gateway between the mobile communication network and the external data network PDN (Packet Data Network). External data networks may include the UMTS or GPRS network of another network operator, the Internet, an X.25 network, but especially in this case a private local area network, such as company LAN. Data packets being transmitted between the gateway node GGSN and the serving node SGSN are always encapsulated according to the gateway tunnelling protocol GTP. The gateway node GGSN also contains PDP addresses and routing information, i.e. SGSN addresses, of the mobile stations. The routing information is thus used to link the data packets between the external data network and the serving node SGSN. The network between the gateway node GGSN and the serving node SGSN employs an IP protocol (IPv4/IPv6, Internet Protocol, version 4/6).

Thus, a packet data connection is established from the mobile station 100 via the radio access network 102, the SGSN 104 and the GGSN 106 to the gateway server 110 located in the MNO's own network. The gateway server 110 may be provided with e.g. a company-specific or customer-specific Access Point Name 108 (APN), whereby the connection from the GGSN 106 to the gateway server 110 may be tunnelled using L2TP technique, which is a tunnelling protocol used to support virtual private networks (VPNs). The use of the L2TP enables the gateway server 110 to carry out all necessary operations relating to, for example, user authentication, user ID management and maintenance, connection capacity management, and maintenance and level of service. Alternatively, the GGSN may carry out these operations, whereby it is not necessary to use the L2TP technique for tunnelling the connection from the GGSN 106 to the gateway server 110.

The virtual private network may preferably be implemented as MPLS (Multiprotocol Label Switching) VPN, wherein the routers of the MPLS network regularly exchange label (i.e. MPLS header) and reachability information with each other in order to create network-based IP Virtual Private Networks, wherein the allowed network paths are identified by so-called Label Switch Paths (LSPs). The routing of the packets is performed through the process of switching labels. When the MPLS router receives a labeled packet, the router examines the topmost label and checks from a predefined lookup table, what kind of routing operation should be performed for the packet. A more detailed description of the MPLS is provided in RFC 2547.

The authentication signalling is carried out using a protocol specific to the MNO's system including e.g. RADIUS or Diameter servers. Accordingly, the server checks that the user identification information is correct, and if accepted, the server will then authorize access to the system, protected preferably by an IPSec gateway, and select an IP address, L2TP parameters, etc. The AAA server will also be notified when the session starts and stops, so that the user can be billed accordingly; or the data can be used for statistical purposes.

From the gateway server 110, there is a core network connection 112, preferably secured by IPsec, in the MNO's own network to a gateway server/router 114 of the company LAN 116. Thereby, the service arrangement disclosed in Fig. 1 allows individual remote workstations or office networks in remote use to be connected to the company's LAN in a controlled manner. The arrangement allows access to various services in the company's LAN, such as e-mail, calendar, intranet services and different database applications.

A problem involved in such arrangement is that it does not necessary enable network-originated data transfer. If the mobile station has its PDP context activated, then there should be no problems to initiate the data transfer from the network, and the IP-based data can be routed from the private network to the mobile station via the gateway server. However, if the mobile station has no PDP context activated, the network-originated data transfer cannot be started before the PDP context is activated. Unfortunately, current 2G and 3G networks do not support network-initiated PDP context activation.

According to an aspect of the invention, the problem is circumvented by an arrangement, wherein the network, preferably the gateway server 110, monitors the traffic coming from the IP network (i.e. from the company's LAN), and if it is noticed that the targeted mobile station has no PDP context activated, then the network signals the mobile station and instructs it to activate a PDP context.

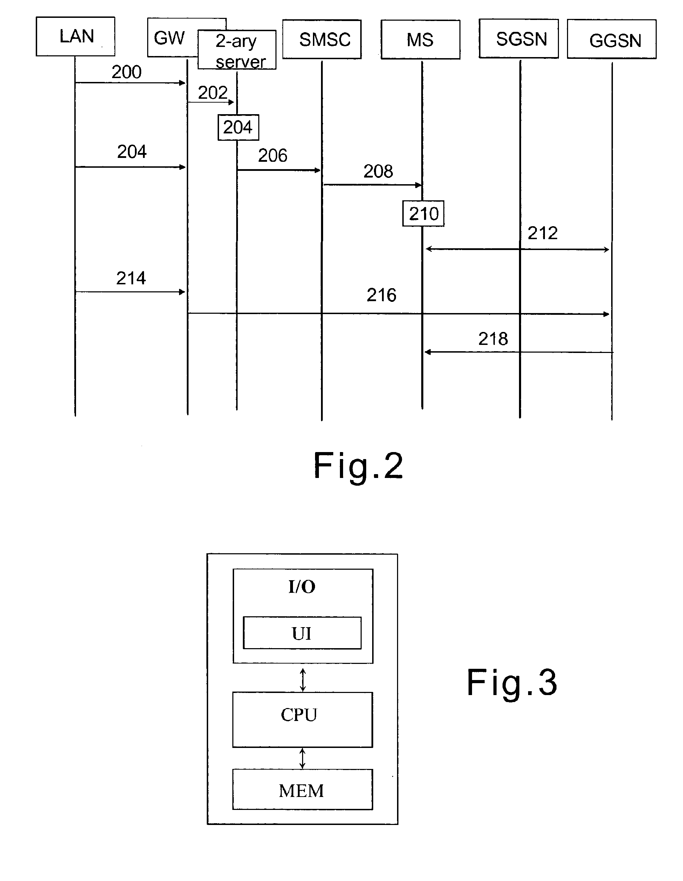

This aspect and the embodiments related thereto are next described more in detail by referring to the signalling chart of Fig. 2. As the starting point, it is assumed that there is some IP based traffic requiring an IP connection to be transmitted from the corporate LAN to a particular remote mobile station MS. It is not relevant what kind of IP based traffic it is; it can be, for example, pushed e-mail or some diagnostic data.

A server or a terminal in the corporate LAN sends (200) this IP based data targeted to the mobile station MS to the gateway server GW operating preferably as a MPLS router. The gateway server GW is provided with a host route, and the gateway server GW typically comprises a routing table for the targeted mobile stations MS. In this case, the gateway server GW notices from the routing table that the mobile station MS has no activated PDP context.

According to an embodiment, there is a functionality, implemented either in a separate server or within the gateway server, for examining the incoming traffic. For illustrating the embodiment, fig. 2 depicts the functionality as a separate (secondary) server having a lower priority route. After noticing that the mobile station MS has no activated PDP context, the gateway server GW routes (202) the IP data to the secondary server, wherein the data examining functionality starts to examine (204) the data.

During normal operations carried out within a MPLS tunnel, the content of the underlying IP packets and their headers are not examined, but all operations carried out within the MPLS tunnel are based on the MPLS labels. When routing the IP data to the secondary server, either the gateway server GW or the secondary server may carry out a "pop" operation (decapsulation) for the IP data, which operation removes the label from the packet, thus ending the MPLS tunnel. Since packet headers and application data this way become visible at the operator network, the data examining functionality is enabled to search for predefined data items in the header information, for example destination IP addresses. The data examining functionality either comprises or is in functional connection with a look-up table, which includes the MSISDN numbers of mobile stations registered in the system and their corresponding IP addresses. Based on a detected IP address of the targeted mobile station MS, the data examining functionality also finds the MSISDN number of the MS.

According to an embodiment, the MSISDN number of the mobile station is utilised in the arrangement e.g. by sending (206, 208) a short message from the data examining functionality to the mobile station MS via a short message service center SMSC. The short message preferably has a predefined format, e.g. a particular character string in its used data field, whereupon receiving a short message with such predefined format, the mobile station MS is arranged to initiate (210) the activation of a PDP context. The mobile station MS preferably comprises the necessary data for activating the PDP stored in its memory. The data preferably includes at least the Access Point Name (APN) assigned to it, and possibly also the username and the password required in the PDP context activation.

A skilled man appreciates that a short message is only one example of how to carry out the signalling to the mobile station, and the signalling can be performed via any communication method not requiring an activated PDP context. For example, any signalling method used in circuit-switched mobile networks (e.g. GSM) can be utilised in relaying the PDP context activation request. Moreover, the mobile station may comprise means for establishing another type of packet data connection, e.g. a WLAN connection, whereby the signalling could be carried out through any signalling method used in such packet data network.

Accordingly, depending on the used the signalling method the mobile station should include a corresponding logic for detecting the PDP context activation request and for starting the PDP context activation procedure. The logic is preferably implemented as a computer program routine stored in the memory of the mobile station.

Now the mobile station activates (212) a PDP context with its corresponding GGSN node according to the conventional PDP context activation procedure known as such. With the above-described feature implemented in the gateway GW, the original sender of the IP data (i.e. the server or the terminal in the corporate LAN) assumes that if the PDP context was not activated at the time of the first transmission (200), the above arrangement should activate the PDP context within a short delay. Thus, according to an embodiment the original sender retransmits (214) the IP data after a short delay (e.g. 10 - 30 seconds), and because the gateway server GW now notices that the mobile station MS has an activated PDP context, the IP data is routed (216, 218) via the GGSN to the mobile station MS. According to an embodiment, the retransmission of the once transmitted IP data may be automated in the network, typically due to unreliability of the radio network, whereby no retransmission from the original sender is required, but it still may be performed as a precaution.

The advantages provided by the embodiments described above are apparent to a skilled man. Since the network-initiated PDP context activation is not currently possible, the available terminal-initiated PDP context activation is advantageously utilised through a very simple signalling procedure. The procedure is transparent to the terminal user and it does not require any changes in the radio network implementation; it is only required that the mobile station includes the logic for detecting the PDP context activation request sent by the network, more particularly by the data examining functionality. The arrangement is also safe from the perspective of the mobile network operator (MNO) offering the gateway service, since the PDP context activation is carried out in an established manner, whereby no changes of security aspects (e.g. authorisation/authentication) of the service are required. Furthermore, the retransmission of the IP data on the original sender side may easily be automated.

The gateway server and the possible secondary server preferably include functionalities to operate as, for example, Unix-, Linux- or Windows-based router device. The mobile stations, in turn, may include a single integrated device, such as a mobile phone or a PDA device, or attached devices, such as a laptop or a palmtop computer using a mobile phone or modem to communicate via the mobile network. Both the routers and the mobile stations are data communication devices, which typically comprise, as illustrated in Fig. 3, memory MEM, a user interface UI, I/O means I/O for arranging data transmission with other devices, and one or more central processing units CPU comprising at least one processor. The memory MEM includes a non-volatile portion for storing the applications controlling the central processing unit CPU and other data to be stored and a volatile portion to be used for temporary data processing.

The actions of the embodiments are preferably automated in the mobile stations to the extent that no user intervention is required upon receiving the PDP context activation request sent by the network. Likewise, actions of the embodiments are preferably automated in the gateway to the extent that data examining functionality operates independently. The steps according to the embodiments can be largely implemented with program commands executed in the central processing units CPU of the mobile station and/or the gateway server or the secondary server.

Thus, said means for carrying out the method described above are preferably implemented as computer software code. The computer software may be stored into any memory means, such as the hard disk of a PC or a CD-ROM disc, from where it can be loaded into the memory of client terminal. The computer software can also be loaded through a network, for instance using a TCP/IP protocol stack. It is also possible to use hardware solutions or a combination of hardware and software solutions for implementing the inventive means.

It is obvious that the present invention is not limited solely to the above-presented embodiments, but it can be modified within the scope of the appended claims.

## Claims

1. A method for network-initiated packet data protocol, PDP, context activation in a system comprising:
a mobile communication network including a packet data network part and another network part;
a gateway server (110) arranged to provide virtual private network, VPN, connections between a mobile terminal ( 100) connected to the mobile communication network and a private network (116), the method comprising:
receiving (200), in the gateway server (110), Internet Protocol, IP-based data, targeted to the mobile terminal (100), from the private network (116); **characterized by**
the gateway server (110) checking, from a routing table, whether said mobile terminal (100) has an activated PDP context with its corresponding gateway node (106);
in response to said mobile terminal (100) having no activated PDP context, examining (204) a destination address of the IP-based data to solve at least one identifier of the mobile terminal (100) used in the mobile communication network;
signalling (206, 208) said mobile terminal (100), based on said at least one identifier, at least partly via said another network part with a request to activate a PDP context; and
starting a PDP context activation procedure (212) between said mobile terminal (100) and its corresponding gateway node (106) in the packet data network part.

2. The method according to claim 1, **characterized by**
in response to said mobile terminal having no activated PDP context, routing (202) the IP-based data to a data examining function having a lower priority route to carry out said examining (204).

3. The method according to claim 2, **characterized in that**
said data examining function is implemented within the gateway server or in a secondary server.

4. The method according to claim 2 or 3, **characterized by**
resolving the packet header data from a terminated VPN connection between the private network and the gateway server, whereby said data examining function
searching for predefined data items, such as said destination address of the IP-based data, in the packet header data; and
searching for said at least one identifier of the mobile terminal used in the mobile communication network, based on at least one predefined data item of the packet header data, from a look-up table.

5. The method according to any of the preceding claims, **characterized in that**
said identifier of the mobile terminal used in the mobile communication network is an MSISDN number of the terminal, the method further comprising:
sending a short message (206, 208) with a predefined format representing a PDP context activation request to the MSISDN number of the terminal.

6. The method according to any of the preceding claims, **characterized by**
receiving (214), in the gateway server (110), a retransmission of the IP-based data, targeted to the mobile terminal (100), from the private network (116) after a delay required for establishing an activated PDP context; and
routing (216, 218) the IP-based data to the mobile terminal (100) via its corresponding gateway node (106) in the packet data network part.

7. A telecommunication system comprising:
a mobile communication network including a packet data network part and another network part;
a gateway server (110) arranged to provide virtual private network, VPN, connections between a mobile terminal ( 100) connected to the mobile communication network and a private network (116), the gateway server comprising:
means for receiving Internet Protocol, IP-based data, targeted to the mobile terminal (100), from the private network (116); **characterized in that** the system comprises
means for checking, from a routing table, whether said mobile terminal (100) has an activated PDP context with its corresponding gateway node (106);
means, responsive to said mobile terminal (100) having no activated PDP context, for examining (204) a destination address of the IP-based data to solve at least one identifier of the mobile terminal used in the mobile communication network; and
means for signalling (206, 208) said mobile terminal ( 100), based on said at least one identifier, at least partly via said another network part with a request to activate a PDP context; whereby
said mobile terminal (100) and its corresponding gateway node (106) in the packet data network part are arranged to start a PDP context activation procedure (212).

8. The telecommunication system according to claim 7, **characterized by**
in response to said mobile terminal having no activated PDP context, the gateway server (110) is arranged to route (202) the IP-based data to a data examining function having a lower priority route to carry out said examining (204).

9. The telecommunication system according to claim 7, **characterized in that**
said data examining function is implemented within the gateway server or in a secondary server.

10. The telecommunication system according to claim 8 or 9, **characterized in that**
the gateway server (110) is arranged to resolve the packet header data from a terminated VPN connection between the private network and the gateway server, and
said data examining function is arranged to
search for predefined data items, such as said destination address of the IP-based data, in the packet header data; and
search for said at least one identifier of the mobile terminal used in the mobile communication network, based on at least one predefined data item of the packet header data, from a look-up table.

11. The telecommunication system according to any of the claims 7-10, **characterized in that**
said identifier of the mobile terminal used in the mobile communication network is an MSISDN number of the terminal, and
said data examining function is arranged to send a short message (206, 208) with a predefined format representing a PDP context activation request to the MSISDN number of the terminal.

12. The telecommunication system according to any of the claims 7-11, **characterized in that** the gateway server (110) is arranged to
receive (214) a retransmission of the IP-based data, targeted to the mobile terminal (100), from the private network (116) after a delay required for establishing an activated PDP context; and
route (216, 218) the IP-based data to the mobile terminal (100) via its corresponding gateway node (106) in the packet data network part.

13. A gateway server (110) arranged in a mobile operator network for providing virtual private network, VPN, connections between a mobile terminal (100) connected to the mobile communication network and a private network (116), the mobile communication network including a packet data network part and another network part;
the gateway server comprising:
means for receiving Internet Protocol, IP-based data, targeted to the mobile terminal (100), from the private network (116); **characterized in that** the gateway server further comprises
means for checking, from a routing table, whether said mobile terminal (100) has an activated PDP context with its corresponding gateway node (106);
means, responsive to said mobile terminal having no activated PDP context, for examining (204) a destination address of the IP-based data to solve at least one identifier of the mobile terminal used in the mobile communication network; and
means for signalling (206, 208) said mobile terminal, based on said at least one identifier, at least partly via said another network part with a request to activate a PDP context.

## Patentansprüche

1. Verfahren zur netzwerkinitiierten Paketdatenprotokoll-Kontextaktivierung, PDP-Kontextaktivierung, in einem System, das folgendes aufweist:
ein Mobilkommunikationsnetzwerk mit einem Paketdatennetzwerkteil und einem anderen Netzwerkteil;
einen Gateway-Server (110), der eingerichtet ist, um virtuelle private Netzwerkverbindungen, VPN-Verbindungen, zwischen einem mobilen Endgerät (100), das mit dem Mobilkommunikationsnetzwerk verbunden ist, und einem privaten Netz (116) vorzusehen, wobei das Verfahren folgendes umfasst:
Empfangen (200), in dem Gateway-Server (110), von auf einem InternetProtokoll basierten Daten, IP-basierten Daten, gerichtet auf das mobile Endgerät (100), aus dem privaten Netz (116); **gekennzeichnet durch**
Prüfen **durch** den Gateway-Server (110) aus einer Routing-Tabelle, ob das mobile Endgerät (100) einen aktivierten PDP-Kontext mit seinem entsprechenden Gateway-Knoten (106) aufweist;
Prüfen (204), in Antwort darauf, dass das mobile Endgerät (100) keinen aktivierten PDP-Kontext aufweist, einer Zieladresse der IP-basierten Daten, um zumindest eine Kennung des in dem Mobilkommunikationsnetzwerk verwendeten mobilen Endgeräts (100) festzustellen;
Anzeigen (206, 208) des mobilen Endgeräts (100), basierend auf der mindestens einen Kennung, zumindest teilweise über das andere Netzwerkteil mit einer Anforderung zur Aktivierung eines PDP-Kontextes; und
Starten eines PDP-Kontextaktivierungsprozesses (212) zwischen dem mobilen Endgerät (100) und seinem entsprechenden Gateway-Knoten (106) in dem Paketdatennetzwerkteil.

2. Verfahren gemäß Anspruch 1, **gekennzeichnet durch** Routing (202) der IP-basierten Daten in Antwort darauf, dass das mobile Endgerät keinen aktivierten PDP-Kontext aufweist, an eine Datenprüffunktion mit einer niedrigeren Prioritätenroute, um die Überprüfung (204) durchzuführen.

3. Verfahren gemäß Anspruch 2, **dadurch gekennzeichnet, dass** die Datenprüffunktion in dem Gateway-Server oder in einem zweiten Server durchgeführt wird.

4. Verfahren gemäß Anspruch 2 oder 3, **gekennzeichnet durch** Herauslösen der Paketkopfdaten aus einer terminierten VPN-Verbindung zwischen dem privaten Netzwerk und dem Gateway-Server, wobei die Datenprüffunktion
nach vorbestimmten Datenelementen, wie z. B. die Zieladresse der IP-basierten Daten in den Paketkopfdaten sucht; und
nach der mindestens einen Kennung des in dem Mobilkommunikationsnetzwerk verwendeten mobilen Endgerät basierend auf mindestens einem vordefinierten Datenelement der Paketkopfdaten aus einer Nachschlagtabelle sucht.

5. Verfahren gemäß einem der vorhergehenden Ansprüche, **dadurch gekennzeichnet, dass**
die Kennung des in dem Mobilkommunikationsnetzwerk verwendeten mobilen Endgeräts eine MSISDN-Nummer des Endgeräts ist, wobei das Verfahren darüber hinaus umfasst:
Senden einer Kurznachricht (206, 208) mit einem vordefinierten Format, das eine PDP-Kontextaktivierungsaufforderung darstellt, an die MSISDN-Nummer des Endgeräts.

6. Verfahren gemäß einem der vorhergehenden Ansprüche, **gekennzeichnet durch**
Empfangen (214), in dem Gateway-Server (110), einer erneuten Übertragung der IP-basierten Daten, die auf das mobile Endgerät (100) gerichtet sind, aus dem privaten Netzwerk (116) nach einer Verzögerung, die zum Einrichten eines aktivierten PDP-Kontextes erforderlich ist; und
Routing (216, 218) der IP-basierten Daten an das mobile Endgerät (100) über seinen entsprechenden Gateway-Knoten (106) in dem Paketdatennetzwerkteil.

7. Telekommunikationssystem, das folgendes aufweist:
ein Mobilkommunikationsnetzwerk mit einem Paketdatennetzwerkteil und einem anderen Netzwerkteil;
einen Gateway-Server (110), der eingerichtet ist, um virtuelle private Netzwerkverbindungen, VPN-Verbindungen, zwischen einem an das Mobilkommunikationsnetzwerk angeschlossenen mobilen Endgerät (100) und einem privaten Netzwerk (116) vorzusehen, wobei der Gateway-Server folgendes aufweist:
Mittel zum Empfangen von auf einem Internetprotokoll basierten Daten, IP-basierten Daten, gerichtet auf das mobile Endgerät (100), aus dem privaten Netzwerk (116), **dadurch gekennzeichnet, dass** das System folgendes aufweist:
Mittel zum Prüfen aus einer Routing-Tabelle, ob das mobile Endgerät (100) einen aktivierten PDP-Kontext an seinem entsprechenden Gateway-Knoten (106) hat;
Mittel zum Prüfen (204), in Antwort darauf, dass das mobile Endgerät (100) keinen aktivierten PDP-Kontext aufweist, einer Zieladresse der IP-basierten Daten, um zumindest eine Kennung des in dem Mobilkommunikationsnetzwerk verwendeten mobilen Endgeräts festzustellen; und
Mittel zum Anzeigen (206, 208) des mobilen Endgeräts (100), basierend auf der mindestens einen Kennung, zumindest teilweise über das andere Netzwerkteil mit einer Aufforderung zur Aktivierung eines PDP-Kontextes; wobei
das mobile Endgerät (100) und sein entsprechender Gateway-Knoten (106) in dem Paketdatennetzwerkteil angeordnet sind, um einen PDP-Kontextaktivierungsprozess (212) zu starten.

8. Telekommunikationssystem gemäß Anspruch 7, **dadurch gekennzeichnet, dass**
in Antwort darauf, dass das mobile Endgerät keinen aktivierten PDP-Kontext aufweist, der Gateway-Server (110) dazu eingerichtet ist, die IP-basierten Daten an eine Datenprüffunktion mit einer niedrigeren Prioritätenroute zu leiten, um die Überprüfung (204) durchzuführen.

9. Telekommunikationssystem gemäß Anspruch 7, **dadurch gekennzeichnet, dass**
die Datenprüffunktion in dem Gateway-Server oder in einem zweiten Server durchgeführt wird.

10. Telekommunikationssystem gemäß Anspruch 8 oder 9, **dadurch gekennzeichnet, dass**
der Gateway-Server (110) eingerichtet ist, um die Paketkopfdaten aus einer terminierten VPN-Verbindung zwischen dem privaten Netz und dem Gateway-Server herauszulösen, und
die Datenprüffunktion eingerichtet ist, um
nach vordefinierten Datenelementen, wie z. B. der Zieladresse der IP-basierten Daten in den Paketkopfdaten zu suchen; und
nach der mindestens einen Kennung des in dem Mobilkommunikationsnetzwerk verwendeten mobilen Endgeräts basierend auf mindestens einem vordefinierten Datenelement der Paketkopfdaten aus einer Nachschlagtabelle zu suchen.

11. Telekommunikationssystem gemäß einem der Ansprüche 7 bis 10, **dadurch gekennzeichnet, dass**
die Kennung des in dem Mobilkommunikationsnetzwerk verwendeten mobilen Endgeräts eine MSISDN-Nummer des Endgeräts ist, und
die Datenprüffunktion eingerichtet ist, um eine Kurznachricht (206, 208) mit einem vordefinierten Format, das eine PDP-Kontextaktivierungsaufforderung darstellt, an die MSISDN-Nummer des Endgeräts zu senden.

12. Telekommunikationssystem nach einem der Ansprüche 7 bis 11, **dadurch gekennzeichnet, dass** der Gateway-Server (110) eingerichtet ist, um
eine erneute Übertragung der IP-basierten Daten, gerichtet auf das mobile Endgerät (100), aus dem privaten Netzwerk (116) nach einer Verzögerung, die zum Einrichten eines aktivierten PDP-Kontextes nötig ist, zu empfangen (214); und
ein Routing (216, 218) der IP-basierten Daten an das mobile Endgerät (100) über seinen entsprechenden Gateway-Knoten (106) in dem Paketdatennetzwerkteil auszuführen.

13. Gateway-Server (110), der in einem mobilen Betreibernetzwerk angeordnet ist zur Bereitstellung von virtuellen privaten Netzwerkverbindungen, VPN-Verbindungen, zwischen einem mobilen Endgerät (100), das mit dem Mobilkommunikationsnetzwerk verbunden ist, und einem privaten Netzwerk (116), wobei das Mobilkommunikationsnetzwerk ein Paketdatennetzwerkteil und ein anderes Netzwerkteil aufweist;
wobei der Gateway-Server folgendes aufweist:
Mittel zum Empfangen von auf einem Internetprotokoll basierten Daten, IP-basierten Daten, gerichtet auf das mobile Endgerät (100), von dem privaten Netzwerk (116), **dadurch gekennzeichnet, dass** der Gateway-Server darüber hinaus folgendes aufweist:
Mittel zum Prüfen, aus einer Routing Tabelle, ob das mobile Endgerät (100) einen aktivierten PDP-Kontext an seinem entsprechenden Gateway-Knoten (106) aufweist;
Mittel zum Prüfen (204), in Antwort darauf, dass das mobile Endgerät keinen aktivierten PDP-Kontext aufweist, einer Zieladresse der IP-basierten Daten, um zumindest eine Kennung des in dem Mobilkommunikationsnetzwerk verwendeten mobilen Endgeräts festzustellen; und
Mittel zum Anzeigen (206, 208) des mobilen Endgeräts, basierend auf der mindestens einen Kennung, zumindest teilweise über das andere Netzwerkteil mit einer Aufforderung zur Aktivierung eines PDP-Kontextes.

## Revendications

1. Un procédé d'activation de contexte de protocole de données par paquets, PDP, initiée par un réseau dans un système comprenant :
un réseau de communication mobile comprenant une partie réseau de données par paquets et une autre partie réseau,
un serveur de passerelle (110) agencé de façon à fournir des connexions de réseau privé virtuel, VPN, entre un terminal mobile (100) raccordé au réseau de communication mobile et un réseau privé (116), le procédé comprenant :
la réception (200), dans le serveur de passerelle (110), de données de type Protocole Internet, IP, ciblées vers le terminal mobile (100), provenant du réseau privé (116), **caractérisée par**
la vérification par le serveur de passerelle (110), à partir d'une table de routage, si ledit terminal mobile (100) possède un contexte PDP activé avec son noeud de passerelle correspondant (106),
en réponse audit terminal mobile (100) ne possédant aucun contexte PDP activé, l'examen (204) d'une adresse de destination des données de type IP de façon à résoudre au moins un identifiant du terminal mobile (100) utilisé dans le réseau de communication mobile,
le signalement (206, 208) audit terminal mobile (100), en fonction dudit au moins un identifiant, au moins partiellement par l'intermédiaire de ladite une autre partie réseau d'une demande d'activation d'un contexte PDP, et
le lancement d'une procédure d'activation de contexte PDP (212) entre ledit terminal mobile (100) et son noeud de passerelle correspondant (106) dans la partie réseau de données par paquets.

2. Le procédé selon la revendication 1, **caractérisé en ce que**
en réponse audit terminal mobile ne possédant aucun contexte PDP activé, le routage (202) des données de type IP à une fonction d'examen de données possédant un chemin à priorité plus basse de façon à exécuter ledit examen (204).

3. Le procédé selon la revendication 2, **caractérisé en ce que**
ladite fonction d'examen de données est mise en oeuvre à l'intérieur du serveur de passerelle ou dans un serveur secondaire.

4. Le procédé selon la revendication 2 ou 3, **caractérisé par**
la résolution des données d'entête de paquet provenant d'une connexion VPN achevée entre le réseau privé et le serveur de passerelle, grâce à quoi ladite fonction d'examen de données
recherche des éléments de données prédéfinis, tels que ladite adresse de destination des données de type IP dans les données d'entête de paquet, et
recherche ledit au moins un identifiant du terminal mobile utilisé dans le réseau de communication mobile, en fonction d'au moins un élément de données prédéfini des données d'entête de paquet, à partir d'une table de consultation.

5. Le procédé selon l'une quelconque des revendications précédentes, **caractérisé en ce que**
ledit identifiant du terminal mobile utilisé dans le réseau de communication mobile est un numéro MSISDN du terminal, le procédé comprenant en outre :
l'envoi d'un message court (206, 208) avec un format prédéfini représentant une demande d'activation de contexte PDP au numéro MSISDN du terminal.

6. Le procédé selon l'une quelconque des revendications précédentes, **caractérisé par**
la réception (214), dans le serveur de passerelle (110), d'une retransmission des données de type IP, ciblées vers le terminal mobile (100), provenant du réseau privé (116) après un délai nécessaire pour l'établissement d'un contexte PDP activé, et
le routage (216, 218) des données de type IP vers le terminal mobile (100) par l'intermédiaire de son noeud de passerelle correspondant (106) dans la partie réseau de données par paquets.

7. Un système de télécommunication comprenant :
un réseau de communication mobile comprenant une partie réseau de données par paquets et une autre partie réseau,
un serveur de passerelle (110) agencé de façon à fournir des connexions de réseau privé virtuel, VPN, entre un terminal mobile (100) raccordé au réseau de communication mobile et un réseau privé (116), le serveur de passerelle comprenant :
un moyen de réception de données de type Protocole Internet, IP, ciblées vers le terminal mobile (100), provenant du réseau privé (116), **caractérisé en ce que** le système comprend
un moyen de vérification, à partir d'une table de routage, si ledit terminal mobile (100) possède un contexte PDP activé avec son noeud de passerelle correspondant (106),
un moyen qui réagit audit terminal mobile (100) ne possédant aucun contexte PDP activé, d'examen (204) d'une adresse de destination des données de type IP de façon à résoudre au moins un identifiant du terminal mobile utilisé dans le réseau de communication mobile, et
un moyen de signalement (206, 208) audit terminal mobile (100), en fonction dudit au moins un identifiant, au moins partiellement par l'intermédiaire de ladite une autre partie réseau, d'une demande d'activation d'un contexte PDP, grâce à quoi
ledit terminal mobile (100) et son noeud de passerelle correspondant (106) dans la partie réseau de données par paquets sont agencés de façon à lancer une procédure d'activation de contexte PDP (212).

8. Le système de télécommunication selon la revendication 7, **caractérisé en ce que**
en réponse audit terminal mobile ne possédant aucun contexte PDP activé, le serveur de passerelle (110) est agencé de façon à router (202) les données de type IP à une fonction d'examen de données possédant un chemin de routage à priorité plus basse de façon à exécuter ledit examen (204).

9. Le système de télécommunication selon la revendication 7, **caractérisé en ce que**
ladite fonction d'examen de données est mise en oeuvre à l'intérieur du serveur de passerelle ou dans un serveur secondaire.

10. Le système de télécommunication selon la revendication 8 ou 9, **caractérisé en ce que**
le serveur de passerelle (110) est agencé de façon à résoudre les données d'entête de paquet provenant d'une connexion VPN achevée entre le réseau privé et le serveur de passerelle, et
ladite fonction d'examen de données est agencée de façon à
rechercher des éléments de données prédéfinis, tels que ladite adresse de destination des données de type IP dans les données d'entête de paquet, et
rechercher ledit au moins un identifiant du terminal mobile utilisé dans le réseau de communication mobile en fonction d'au moins un élément de données prédéfini des données d'entête de paquet, à partir d'une table de consultation.

11. Le système de télécommunication selon l'une quelconque des revendications 7 à 10, **caractérisé en ce que**
ledit identifiant du terminal mobile utilisé dans le réseau de communication mobile est un numéro MSISDN du terminal, et
ladite fonction d'examen de données est agencée de façon à envoyer un message court (206, 208) avec un format prédéfini représentant une demande d'activation de contexte PDP au numéro MSISDN du terminal.

12. Le système de télécommunication selon l'une quelconque des revendications 7 à 11, **caractérisé en ce que** le serveur de passerelle (110) est agencé de façon à
recevoir (214) une retransmission des données de type IP, ciblées vers le terminal mobile (100), provenant du réseau privé (116) après un délai nécessaire pour l'établissement d'un contexte PDP activé, et
router (216, 218) les données de type IP vers le terminal mobile (100) par l'intermédiaire de son noeud de passerelle correspondant (106) dans la partie réseau de données par paquets.

13. Un serveur de passerelle (110) agencé dans un réseau d'opérateur mobile destiné à fournir des connexions de réseau privé virtuel, VPN, entre un terminal mobile (100) raccordé au réseau de communication mobile et un réseau privé (116), le réseau de communication mobile comprenant une partie réseau de données par paquets et une autre partie réseau,
le serveur de passerelle comprenant :
un moyen de réception de données de type Protocole Internet, IP, ciblées vers le terminal mobile (100), provenant du réseau privé (116), **caractérisé en ce que** le serveur de passerelle comprend en outre
un moyen de vérification, à partir d'une table de routage, si ledit terminal mobile (100) possède un contexte PDP activé avec son noeud de passerelle correspondant (106),
un moyen qui réagit audit terminal mobile ne possédant aucun contexte PDP activé, d'examen (204) d'une adresse de destination des données de type IP de façon à résoudre au moins un identifiant du terminal mobile utilisé dans le réseau de communication mobile, et
un moyen de signalement (206, 208) audit terminal mobile, en fonction dudit au moins un identifiant, au moins partiellement par l'intermédiaire de ladite une autre partie réseau, d'une demande d'activation d'un contexte PDP.
